# EUROPEAN PATENT SPECIFICATION

(11) **EP 2 803 683 B1**
(45) Date of publication and mention of the grant of the patent: **22.02.2017**
(21) Application number: 14167944.9
(22) Date of filing: 12.05.2014
(51) Int. Cl.: C08G 81/02, C08L 9/00

(54) **Functionalized elastomer and method of making such an elastomer**
Funktionalisiertes Elastomer und Verfahren zur Herstellung eines solchen Elastomers
Élastomère fonctionnalisé et procédé de fabrication d'un tel élastomère

(30) Priority: 15.05.2013 US 201313894796; 15.05.2013 US 201413894790
(43) Date of publication of application: 19.11.2014
(73) Proprietor: The Goodyear Tire & Rubber Company, Akron, Ohio 44316 (US)
(72) Inventor: Mazumdar, Arindam, Stow, Ohio 442244 (US); Feher, Frank James, Copley, Ohio 44321 (US)
(74) Representative: Kutsch, Bernd

(56) References cited:
- EP-A1- 2 735 451

## Description

### Background

Polyisoprene is a key material for producing a broad range of consumer and industrial products. The two most common forms for polyisoprene are "natural rubber" and "synthetic polyisoprene". Natural rubber typically is derived from latex produced by *Hevea brasiliensis* (i.e., the common rubber tree), although a broad range of other plants (e.g., guayule and *Taraxacum kok-Saghyz* (aka Russian dandelion)) also are known to produce stoichiometrically similar, rubber-like materials. Unlike natural rubber, which is only formally derived from polymerization of isoprene, synthetic polyisoprene is actually produced by large-scale, industrial polymerization of isoprene monomer.

The structures of synthetic polyisoprene (PI) and natural rubber (NR) are similar enough to allow for free substitution of either rubber in many applications, but there are important differences. For example, rubber produced by the rubber tree has a high molecular weight and a tendency to crystallize more completely and faster than commercially available synthetic PI. The high molecular weight is desirable for imparting "green strength" during tire manufacturing. The rapid strain-crystallization of rubber is believed to be responsible for the excellent wear and tear properties of natural rubber- especially under severe conditions.

Early efforts to develop synthetic PI as a replacement for natural rubber elucidated much of the fundamental technology and allowed commercialization of synthetic PI to be achieved in the 1960's. (see e.g. Schoenberg, et al Rubber Chem Tech. 52, 526-604 (1979)) In general, the following characteristics are believed to be desirable in synthetic PI intended for tire applications: high cis-content (vs trans content); high 1,4-addition (vs 3,4-addition); high head-to-tail content; and high molecular weight.

Subsequent efforts to achieve the highest practical level for each characteristic - especially using Neodymium-based Ziegler/Natta-type catalysts have built upon the early work and led to today's best synthetic replacements for NR. (see e.g. Friebe, et al Adv. Polym. Sci. 204, 1 (2006))

For several decades, it was believed that the differences between natural rubber and synthetic rubber were the result of natural rubber having an almost pure cis-1,4 stereochemistry and branched polymer chain structures. The potential role of non-rubber constituents in natural rubber was largely ignored. It now appears from extensive recent work by Yasuyuki Tanaka and coworkers that the non-rubber components play an essential role in determining the properties and performance of natural rubber. (see e.g., Tanaka, et al Polymer 41, 7483-8 (2000); Rubber Chem. Tech. 74, 355-75 (2001); Biopolymers 2, 1-25 (2001)) This is particularly true for *Hevea* rubber, which clearly has a structure with nanometer-scale phase domains that can explain many of the property differences between natural rubber and synthetic rubber. In other words, natural rubber is best viewed as a nanostructured elastomer rather than a hydrocarbon polymer with non-hydrocarbon impurities.

### Summary of the Invention

The present invention is directed to a copolymer in accordance with claim 1 and to a method in accordance with claim 9.

Dependent claims refer to preferred embodiments of the invention.

### Brief Description of the Drawings

Figure 1 is a representation showing an emulsion formed from an elastomer.
Figure 2 is a graph of stress versus strain for various elastomers.

### Description of Preferred Embodiments

There is disclosed a copolymer comprising: a polymeric backbone chain derived from a monomer comprising at least one conjugated diolefin monomer and optionally at least one vinyl aromatic monomer; and a polymeric side-chain bonded exclusively to a terminal end of the backbone chain, the side-chain comprising a polymer derived from a monomer having a hydrogen bond donor moiety and a hydrogen bond acceptor moiety.

The copolymer comprises the structure I

X-R-O-R'-S-Z (I)

where X is a polymer derived from a monomer comprising at least one conjugated diolefin monomer and optionally at least one vinyl aromatic monomer; S is sulfur; Z is a polymer derived from a monomer having a hydrogen bond donor moiety and a hydrogen bond acceptor moiety; R is a covalent bond or an alkanediyl group of 1 to 12 carbon atoms bonded to the terminal end of X; O is oxygen; and R' is a divalent organic group comprising a maleimido group linked to the S.

Various strategies have been attempted for the synthesis of functionalized polyisoprene (PI) which can show increase in tensile strength by inducing nanostructure formation thereby mimicking natural rubber (NR). One objective is to use polyisoprenic polymers with high cis-content which would enable the strain induced crystallization as observed in NR. Both Ziegler-Natta and anionic polymerization could typically be used to synthesize the precursor to the desired end-functionalized polymer. Anionic approach is the preferred way to synthesize hydroxyl-end-functionalized PI (PI-OH), which served as a precursor for the synthesis of the nanostructured elastomer.

The polymerization employed in making the hydroxyl-end functionalized elastomer is typically initiated by adding an organolithium initiator to an organic polymerization medium that contains the monomers. Such polymerizations can be carried out utilizing continuous or batch polymerization techniques.

Suitable polymerization methods are known in the art, for example as disclosed in US-A- 4,843,120; US-A- 5,137,998; US-A- 5,047,483; US-A- 5,272,220; US-A-5,239,009; US-A- 5,061,765; US-A- 5,405,927; US-A- 5,654,384; US-A- 5,620,939; US-A- 5,627,237; US-A- 5,677,402; US-A- 6,103,842; and US-A- 6,559,240; all of which are fully incorporated herein by reference.

The functionalized elastomers usable in accordance with this invention can be made by the homopolymerization of a conjugated diolefin monomer or by the random copolymerization of a conjugated diolefin monomer with a vinyl aromatic monomer. It is, of course, also possible to make living polymers by polymerizing a mixture of conjugated diolefin monomers with one or more ethylenically unsaturated monomers, such as vinyl aromatic monomers. The conjugated diolefin monomers which can be utilized in the synthesis of functionalized elastomer generally contain from 4 to 12 carbon atoms. Those containing from 4 to 8 carbon atoms are generally preferred for commercial purposes. For similar reasons, 1,3-butadiene and isoprene are the most commonly utilized conjugated diolefin monomers. Some additional conjugated diolefin monomers that can be utilized include 2,3-dimethyl-1,3-butadiene, piperylene, 3-butyl-1,3-octadiene, 2-phenyl-1,3-butadiene, alone or in admixture.

Many types of unsaturated monomers which contain carbon-carbon double bonds can be polymerized into polymers using such metal catalysts. Elastomeric or functionalized elastomers can be synthesized by polymerizing diene monomers utilizing this type of metal initiator system. The diene monomers that can be polymerized into synthetic functionalized elastomers can be either conjugated or nonconjugated diolefins. Conjugated diolefin monomers containing from 4 to 8 carbon atoms are generally preferred. Vinyl-substituted aromatic monomers can also be copolymerized with one or more diene monomers into functionalized elastomers, for example styrene-butadiene rubber (SBR). Some representative examples of conjugated diene monomers that can be polymerized into functionalized elastomers include 1,3-butadiene, isoprene, 1,3-pentadiene, 2,3-dimethyl-1,3-butadiene, 2-methyl-1,3-pentadiene, 2,3-dimethyl-1,3-pentadiene, 2-phenyl-1,3-butadiene, and 4,5-diethyl-1,3-octadiene. Some representative examples of vinyl-substituted aromatic monomers that can be utilized in the synthesis of functionalized elastomers include styrene, 1-vinylnapthalene, 3-methylstyrene, 3,5-diethylstyrene, 4-propylstyrene, 2,4,6-trimethylstyrene, 4-dodecylstyrene, 3-methyl-5-normal-hexylstyrene, 4-phenylstyrene, 2-ethyl-4-benzylstyrene, 3,5-diphenylstyrene, 2,3,4,5-tetraethylstyrene, 3-ethyl-1-vinylnapthalene, 6-isopropyl-1-vinylnapthalene, 6-cyclohexyl-1-vinylnapthalene, 7-dodecyl-2-vinylnapthalene, α-methylstyrene, and the like.

Vinyl aromatic monomers are probably the most important group of ethylenically unsaturated monomers which are commonly incorporated into polydienes. Such vinyl aromatic monomers are, of course, selected so as to be copolymerizable with the conjugated diolefin monomers being utilized. Generally, any vinyl aromatic monomer which is known to polymerize with organolithium initiators can be used. Such vinyl aromatic monomers typically contain from 8 to 20 carbon atoms. Usually, the vinyl aromatic monomer will contain from 8 to 14 carbon atoms. The most widely used vinyl aromatic monomer is styrene.

Some representative examples of ethylenically unsaturated monomers that can potentially be synthesized into functionalized elastomers usable in accordance with this invention include vinyl aromatics such as styrene, α-methylstyrene, bromostyrene, chlorostyrene, fluorostyrene and the like, alone or in admixture.

Elastomers which are copolymers of one or more diene monomers with one or more other ethylenically unsaturated monomers will normally contain from 50 weight percent to 99 weight percent conjugated diolefin monomers and from 1 weight percent to 50 weight percent of the other ethylenically unsaturated monomers in addition to the conjugated diolefin monomers. For example, copolymers of conjugated diolefin monomers with vinylaromatic monomers, such as styrene-butadiene rubbers which contain from 50 to 95 weight percent conjugated diolefin monomers and from 5 to 50 weight percent vinylaromatic monomers, are useful in many applications.

The functionalized elastomers produced in accordance with this invention are generally prepared by solution polymerizations that utilize inert organic solvents, such as saturated aliphatic hydrocarbons, aromatic hydrocarbons, or ethers. The solvents used in such solution polymerizations will normally contain from 4 to 10 carbon atoms per molecule and will be liquids under the conditions of the polymerization. Some representative examples of suitable organic solvents include pentane, isooctane, cyclohexane, normal-hexane, benzene, toluene, xylene, ethylbenzene, tetrahydrofuran, and the like, alone or in admixture. For instance, the solvent can be a mixture of different hexane isomers. Such solution polymerizations result in the formation of a polymer cement (a highly viscous solution of the polymer).

Some representative examples of functionalized elastomers usable in accordance with this invention include functionalized versions of polyisoprene (IR), polybutadiene (BR), styrene-isoprene-butadiene rubber (SIBR), styrene-isoprene rubber (SIR), isoprene-butadiene rubber (IBR). In cases where the functionalized elastomer is comprised of repeat units that are derived from two or more monomers, the repeat units which are derived from the different monomers will normally be distributed in an essentially random manner.

The initiator used to initiate the polymerization employed in synthesizing the living functionalized elastomer that is functionalized in accordance with this invention is typically selected from the group consisting of barium, lithium, magnesium, sodium, and potassium. Lithium and magnesium are the metals that are most commonly utilized in the synthesis of such metal terminated polymers (living polymers). Normally, lithium initiators are more preferred.

Organolithium compounds are the preferred initiators for utilization in such polymerizations. The organolithium compounds which are utilized as initiators are normally organo monolithium compounds.

In one embodiment, the organolithium compounds which may be used as initiators are commonly known in the art, including alkyl lithium compounds such as n-butyl lithium and the like. In this embodiment, the hydroxyl-end functionalized elastomer is obtained using ethylene oxide termination of the polymerization reaction.

In another embodiment, the organolithium compounds which may be used as initiators are monofunctional compounds which can be represented by the formula (II) 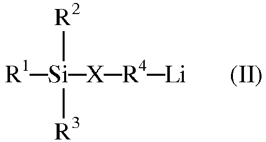 where R¹, R², R³ can all be the same or different and are selected from the group consisting of alkyls having from 1 to 8 carbon atoms, cycloalkyls having from 3 to 11 carbon atoms, or aryls having from 6 to 14 carbon atoms, R⁴ is an alkylene having from 1 to 8 carbon atoms, a cycloalkylene having from 3 to 11 carbon atoms, or an arylene having from 6 to 14 carbon atoms, X is S, O or NH, and Li is lithium. In this embodiment, formation of a metal terminated living polyisoprene polymer is depicted in Scheme 1, wherein the initiator of formula II is t-butyldimethylsiloxypropyl lithium.

Polymerization using the initiator of formula II results in an end-functionalized elastomer as depicted in Scheme 1. Removal of the substituted silyl group R¹R²R³Si (e.g., the t-butyldimethylsilyl group shown encircled in Scheme 1) affords the hydroxy end-functionalized elastomer. Removal of the substituted silyl group may be done, for example, by reaction with acids such as hydrochloric acid, or with fluoride compounds such as tetrabutyl ammonium fluoride (TBAF), or with alkylaluminum reagents such as diisobutylaluminium hydride (DIBAL-H).

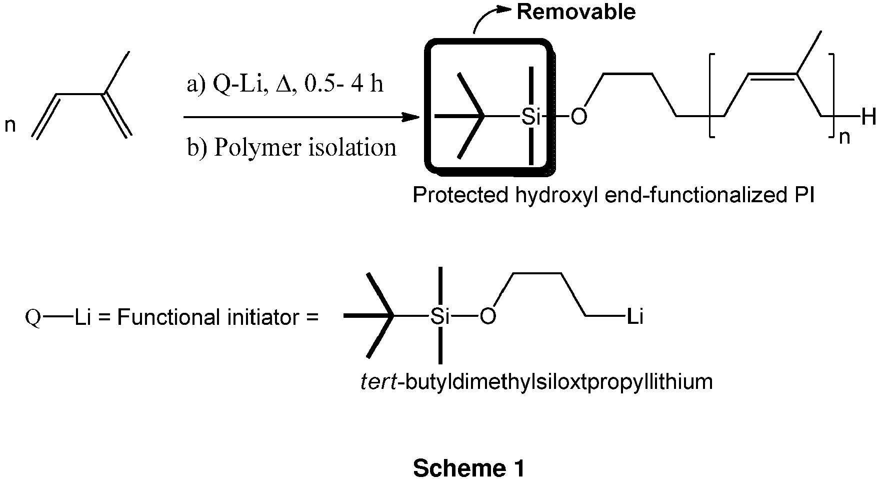

The amount of organolithium initiator utilized will vary depending upon the molecular weight which is desired for the functionalized elastomer being synthesized as well as the precise polymerization temperature which will be employed. The precise amount of organolithium compound required to produce a polymer of a desired molecular weight can be easily ascertained by persons skilled in the art. However, as a general rule from 0.01 to 1 phm (parts per 100 parts by weight of monomer) of an organolithium initiator will be utilized. In most cases, from 0.01 to 0.1 phm of an organolithium initiator will be utilized with it being preferred to utilize 0.025 to 0.07 phm of the organolithium initiator.

The polymerization temperature utilized can vary over a broad range of from -20°C to 180°C. In most cases, a polymerization temperature within the range of 30°C to 125°C will be utilized. It is typically preferred for the polymerization temperature to be within the range of 45°C to 100°C. It is typically most preferred for the polymerization temperature to be within the range of 60°C to 85°C. The pressure used will normally be sufficient to maintain a substantially liquid phase under the conditions of the polymerization reaction.

The rubber polymers which are prepared by anionic polymerization may be coupled with a suitable coupling agent, such as a tin halide or a silicon halide, to improve desired properties.

The metal terminated living functionalized elastomers utilized in the practice of this invention can be of virtually any molecular weight. However, the number average molecular weight of the living functionalized elastomer will typically be within the range of 10,000 to 1,000,000. In one embodiment, the number average molecular weight of the living functionalized elastomer will be within the range of a 50,000 to 500,000. In one embodiment, the living functionalized elastomers have a number average molecular weight within the range of 100,000 to 250,000.

After the polymerization reaction is completed, it will normally be desirable to "kill" any living polydiene chains which remain. Polymerization may be terminated in the usual manner, using an excess of a short chain alcohol such as methanol, ethanol, isopropanol, or the like. The protected end-group functionalized polydiene elastomer can then be recovered from the solution utilizing standard techniques. Deprotection of the protected-end-group functionalized polymer is carried out to produce the hydroxyl-end functionalized polydiene.

The hydroxyl end-functionalized polymer may be converted to a "thiolophile" conducive to reactive in a thiol-ene reaction. In one embodiment, the hydroxyl-end functionalized polymer is reacted with a maleimido acid chloride of formula III 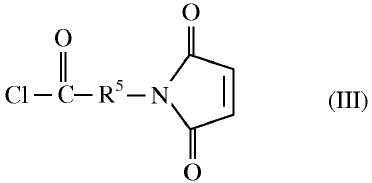 where R⁵ is a linear or branch alkanediyl, cycloalkanediyl, or combination thereof. Formation of a maleimide-terminated polymer through reaction of the hydroxyl end-functionalized elastomer with a maleimido acid chloride is depicted in Scheme 2, where R⁵ is cyclohexyl and the hydroxyl end-functionalized elastomer is the unprotected form of the elastomer from Scheme 1.

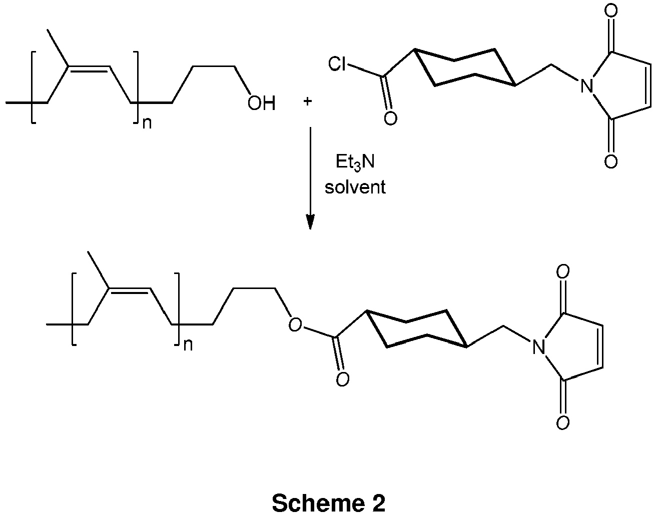

The maleimide-terminated polymer is combined with a thiol-terminated version of the polymer Z to obtain the copolymer.

In one embodiment, the polymer Z derived from a monomer having a hydrogen bond donor moiety and a hydrogen bond acceptor moiety includes homopolymers and copolymers of various monomers, including but not limited to polymers of: acrylamides and substituted acrylamides, methacrylamides and substituted methacrylamides, acrylic acids and substituted acrylic acids, methacrylic acids and substituted methacrylic acids.

The term "hydrogen bond" is used herein in the same manner as would be understood by one of ordinary skill in the art. The terms "hydrogen bond acceptor moiety" and "hydrogen bond donor moiety" are defined herein as moieties that are capable of forming a hydrogen bond when at least one acceptor moiety and at least one donor moiety are present.

In one embodiment, the polymer Z is a polymer of a monomer of formula IV 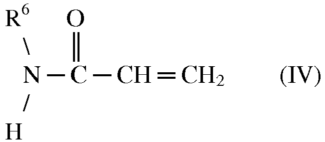 where R⁶ is selected from the group consisting of C2 to C6 linear alkyl, C2 to C6 branched alkyl, and C3 to C6 cycloalkyl.

In one embodiment, Z is of formula (V) 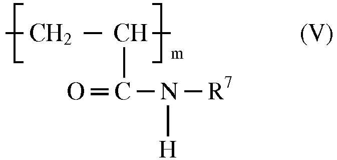 where R⁷ is selected from the group consisting of C2 to C6 linear alkyl, C2 to C6 branched alkyl, and C3 to C6 cycloalkyl.

In one embodiment, the polymer Z is a polymer of an N-substituted monoalkyl acrylamide derivative.

In one embodiment, the polymer Z is a polymer of N-isopropylacrylamide.

In one embodiment, the polymer Z has a weight average molecular weight ranging from 500 to 20000 g/mol.

In one embodiment, the copolymer comprises from 1 to 20 weight percent Z.

The copolymer of formula I may be produced by various methods. In one embodiment, the copolymer may be produced by terminally functionalizing the polymer X with the polymer Z to produce a graft copolymer with an elastomer backbone X and a terminal Z. A convenient way for the functionalization of a variety of elastomers is the thiol-ene reaction during which alkene moiety being present in the maleimide group of the maleimide terminated polymer is transformed into a thioether by reaction with a thiol. In order to allow the functionalization of the elastomers, a thiol-terminated version of the polymer Z is used. The thiol moiety can be introduced by reaction of thiocarbonylthio endgroups with nucleophilic agents. Polymers exhibiting thiocarbonylthio end groups can be produced by reversible addition-fragmentation chain transfer (RAFT) polymerization. One reaction scheme describes the use of PNIPAM as polymer Z, however, this invention is not limited to that as any polymer derived from a monomer having a hydrogen bond donor moiety and a hydrogen bond acceptor moiety, which for example can be produced by RAFT polymerization, can be used for the functionalization of the elastomer.

In one embodiment, the thiol-terminated polymer Z is obtained by polymerizing a monomer having hydrogen bond donor and acceptor moieties in the presence of a thiocarbonylthio RAFT chain transfer agent to form a polymer comprising a terminal thiocarbonylthio group; and cleaving the terminal thiocarbonylthio group to a thiol group to form the polymer Z comprising a terminal thiol group.

In one embodiment, the terminal thiol group of the polymer Z is incorporated in the polymer during polymerization through the mechanism of reversible addition-fragmentation chain transfer (RAFT). More details of the RAFT polymerization mechanism may be found by reference to Moad et al., Aust. J. Chem. 2005, 58, 379-410. As is known in the art, RAFT polymerization of free-radical polymerizable monomers is accomplished in the presence of a thiocarbonylthio RAFT chain transfer agent of general formula (VI) 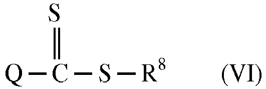 where R⁸ is a free radical leaving group able to reinitiate polymerization, and Q is a functional group that influences the rate of radical addition and fragmentation. Suitable thiocarbonylthio RAFT chain transfer agents include dithioesters, trithiocarbonates, dithiocarbamates, and xanthates. In one embodiment, the thiocarbonylthio chain transfer agent is a trithiocarbonate. In one embodiment, the thiocarbonylthio chain transfer agent is selected from the group consisting of S-1-dodecyl-S-(αα'-dimethyl-α"-acetic acid) trithiocarbonate and 4-cyano-4-dodecylsulfanylthiocarbonylsulfanyl-4-methyl butyric acid.

Upon RAFT polymerization in the presence of a suitable thiocarbonylthio chain transfer agent, the chain-terminated polymer has the general formula (VII) 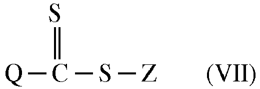 where Z represents the polymer chain derived from monomers having a hydrogen bond donor moiety and a hydrogen bond acceptor moiety.

The chain terminated polymer of formula VI is then reacted with a suitable nucleophile to cleave the C-S linkage to obtain a second polymer of formula (VII) having a terminal thiol group

H-S-Z (VIII)

In one embodiment, the chain terminated polymer of formula VII is treated by aminolysis to obtain the thiol-terminated polymer of formula VIII.

The polymer Z having a terminal thiol group may be reacted with the maleimide terminated polymer in a thiol-ene reaction to form the copolymer as illustrated in Scheme 3, where the polymer Z is shown as PNIPAM, poly (N-isopropylacrylamide).

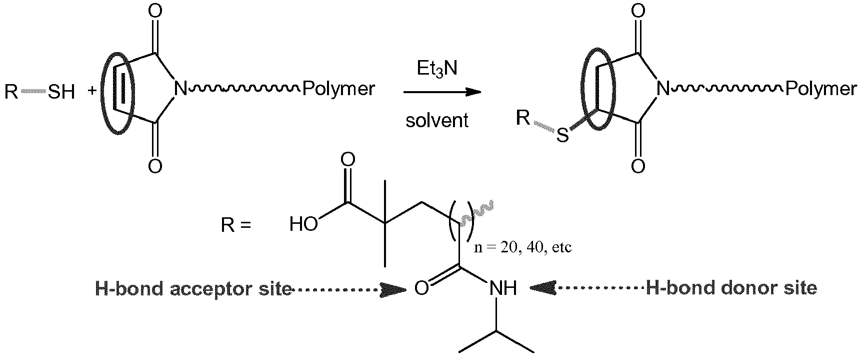

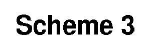

The end-functionalized copolymer of formula I may be compounded into a rubber composition.

The rubber composition may optionally include, in addition to the functionalized polymer, one or more rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis 1,4 polybutadiene), polyisoprene (including cis 1,4 polyisoprene), butyl rubber, halobutyl rubber such as chlorobutyl rubber or bromobutyl rubber, styrene/isoprene/butadiene rubber, copolymers of 1,3 butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the at least one additional rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E SBR having a medium to relatively high bound styrene content, namely, a bound styrene content of 30 to 45 percent.

By emulsion polymerization prepared E-SBR, it is meant that styrene and 1,3 butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica may be used.

The commonly employed siliceous pigments which may be used in the rubber compound include conventional pyrogenic and precipitated siliceous pigments (silica). In one embodiment, precipitated silica is used.

Various commercially available silicas may be used, such as, only for example herein, silicas commercially available from PPG Industries under the Hi-Sil trademark with designations 210 and 243; silicas available from Rhodia, with, for example, designations of Z1165MP and Z165GR and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm3/100 g.

Other fillers may be used in the rubber composition including, but not limited to, particulate fillers including ultra high molecular weight polyethylene (UHMWPE), crosslinked particulate polymer gels including but not limited to those disclosed in US-A- 6,242,534; US-A- 6,207,757; US-A- 6,133,364; US-A- 6,372,857; US-A-5,395,891; or US-A- 6,127,488, and plasticized starch composite filler including that disclosed in U.S. Patent No. 5,672,639. Such other fillers may be used in an amount ranging from 1 to 30 phr.

In one embodiment the rubber composition may contain a conventional sulfur containing organosilicon compound. In one embodiment, the sulfur containing organosilicon compounds are the 3,3'- bis(trimethoxy or triethoxy silylpropyl) polysulfides. In one embodiment, the sulfur containing organosilicon compounds are 3,3'-bis(triethoxysilylpropyl) disulfide and/or 3,3'- bis(triethoxysilylpropyl) tetrasulfide.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road, or truck tire. In one embodiment, the tire is a passenger or truck tire. The tire may also be a radial or bias.

Vulcanization of the pneumatic tire of the present invention is generally carried out at conventional temperatures ranging from 100°C to 200 °C. In one embodiment, the vulcanization is conducted at temperatures ranging from 110°C to 180 °C. Any of the usual vulcanization processes may be used such as heating in a press or mold, heating with superheated steam or hot air. Such tires can be built, shaped, molded and cured by various methods which are known and will be readily apparent to those having skill in such art.

This invention is illustrated by the following examples that are merely for the purpose of illustration and are not to be regarded as limiting the scope of the invention or the manner in which it can be practiced. Unless specifically indicated otherwise, parts and percentages are given by weight.

### Examples

### Reagents:

Dichloromethane (DCM), tetrahydrofuran (THF), methanol (MeOH), isopropanol, triethylamine (Et3N), n-Butyllithium (nBuLi), cyclohexane, maleic anhydride, tetra-n-butylammonium fluoride (TBAF), diisobutylaluminum hydride (DIBAL-H) were purchased commercially and used as received without any further distillation/purification treatment.

A thiol form of poly(N-isopropylacrylamide), PNIPAM-SH, wasprepared following procedure described in copending US patent application serial no. 13/332,837.

### Instruments:

a) Nuclear Magnetic Resonance (NMR): ¹H NMR and ¹³C NMR spectra were recorded on a Varian INOVA 400 MHz spectrometer. Chemical shifts are given in parts per million (ppm) either by using tetramethylsilane (TMS, δ = 0.00) or the residual protic solvent peak (for CHCl₃, δ = 7.26 and for CH₂Cl₂, δ = 5.30) as a shift reference for ¹H NMR spectra and CDCl₃ (δ = 77.16) and CD₂Cl₂ (δ = 53.80) as a shift reference for ¹³C NMR spectra.
b) Tensile Testing: Physical testing of the solution cast polymer films were done on a MTS Tensile Tester with 100 N load cell. Engineering strain rate of 10%/s was applied to each samples which corresponded to a displacement rate of 2.6 mm/s.
c) Gel Permeation Chromatography (GPC): GPC analysis was done using Agilent 1100 Series-LC with a Wyatt Technologies Mini Dawn detector and Gilson 234 Auto sampler. THF was used as the mobile phase at a flow rate of 1.00 ml/min at a column temperature of 35 °C. Astra 4.73.04 software was used for analysis of the chromatogram and determining calculated sample mass, molecular weight (Mw, Mn) and polydispersity (PDI = Mw/Mn).

### Example 1.

### Synthesis of hydroxyl end-functionalized polyisoprene (1) via chain-termination approach (Scheme 4)

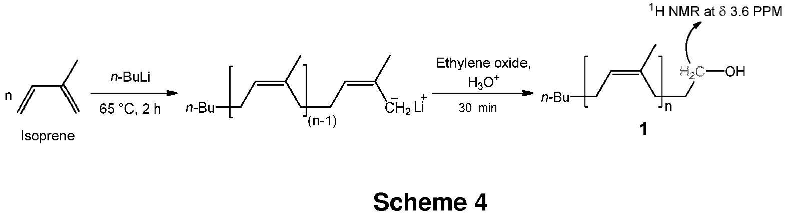

A 4oz. Boston round glass bottle was charged with isoprene (15% by weight in cyclohexane) (9.1 g monomer, 133 mmol) and the 1.6 M n-BuLi/hexane initiator (133 mmol) was added all at once and the bottle was placed in a polymerization bath pre-set at 65 °C. The bottle was tumbled at that temperature for 2 hours. At the end of that time, the bottle was taken out of the polymerization bath and terminated using ethylene oxide gas. The polymer was purified by precipitating the cement in MeOH at room temperature. The precipitated polymer was then dried in vacuum oven. GPC analysis indicated the Mn of the polymer to be 6.8 kDa and a PDI of 1.03.

Hydroxyl-terminated polyisoprene of various molecular weights was produced following a similar procedure.

### Example 2.

### Synthesis of hydroxyl end-functionalized polyisoprene (1) via functional initiator approach (Scheme 1)

In this approach, the polymerization procedure was similar to Example 1 except for using the tert-butyldimethylsiloxypropyllithium (tBDMSPrLi) functional initiator. A 4oz. Boston round glass bottle was charged with isoprene (15% by weight in cyclohexane) (9.1 g monomer, 133 mmol) and the 0.47 M tBDMSPrLi/cyclohexane initiator (2.06e-2 mmol) was added all at once and the bottle was placed in a polymerization bath pre-set at 65 °C. The bottle was tumbled at that temperature for 2 hours. At the end of that time, the bottle was taken out of the polymerization bath and quenched with isopropanol. The polymer was purified by precipitating the cement in MeOH at room temperature under vigorous stirring. GPC analysis indicated the Mn of the polymer to be 458 kDa and a PDI of 1.04. ¹H NMR analysis indicated the polymer contains the protected chain-end-groups. Characteristic ¹H NMR resonances were observed: a singlet at ∼ δ 0.47 corresponding to the dimethyl groups and another singlet at ∼ δ 0.89 ppm corresponding to the tert-butyl group. The dried polymer was stored in a vial under nitrogen.

Deprotection of the polymer was done using 1 M diisobutylaluminum hydride/hexane (DIBAL-H). The protected polymer (6 g, 1.31 e-2 mmol) was dissolved in THF (120 mL) and 5 molar equivalent (with respect to the moles of the protecting group) DIBAL-H (65 mg, 6.5e-2 mmol) was added all at once and the reaction mixture was stirred at room temperature for 12 hours. The de-protected polymer was then isolated by precipitation in MeOH.

¹H NMR analysis indicated the removal of the peaks characteristic to the dimetyl- and tert-butyl group indicating the removal of the TBDMS group. Hydroxyl-end functionalized polyisoprene (PI-OH) of various molecular weights was produced as shown in Table 2. As seen in Table 2, use of the functional initiator approach followed by de-protection with DIBAL-H, de-protected PI-OH of molecular weights starting from as low as 5 kDa to as high as 450 kDa were synthesized. All the polymers had narrow poly dispersity index (PDI), consistent with efficient anionic polymerization.

**Table 2: Synthesis of PI-OH**

| PI-OH^{a} | Mn GPC (kDa) | PDI |
|---|---|---|
| 1 | ∼ 9 | 1.05 |
| 2 | ∼ 22 | 1.03 |
| 3 | ∼ 51 | 1.08 |
| 5 | ∼ 87 | 1.01 |
| 6 | ∼ 113 | 1.01 |
| 7 | ∼ 280 | 1.01 |
| 8 | ∼ 380 | 1.01 |
| 9 | ∼ 458 | 1.04 |

| | | |
|---|---|---|
| *^{a}* In all cases >95% yields were obtained | | |

### Example 3.

The hydroxyl-end functionalized polyisoprene of Example 2 was converted to a maleimide terminated polyisoprene following the route in Scheme 5.

To a dichloromethane solution of the 450 kDa hydroxyl end-funtionalized PI of Example 2 (6 g, 1.31 e-2 mmol), a dichloromethane solution of 5 equiv. maleimido acid-chloride (16 mg, 6.5e-2 mmol) was added. After stirring for 10 minutes, an excess of triethylamine was added and the reaction stirred overnight at room temperature. The polymer was purified by precipitation in MeOH and dried in vacuum oven at 30 °C for 24 hours.

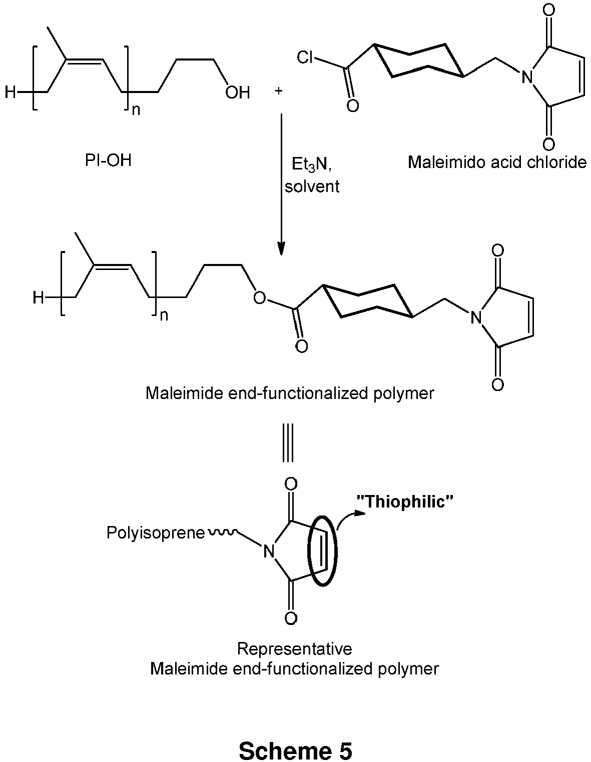

¹H NMR resonances indicated the complete disappearance of the peak at δ 3.63 (-CH₂-OH of starting material) and the formation of the product was confirmed by the appearance of a new peak at δ 4.2 corresponding to the -CH₂-O(CO)- of the newly formed ester bond.

The maleimido acid chloride was produced following the synthetic pathway as shown in Scheme 6.

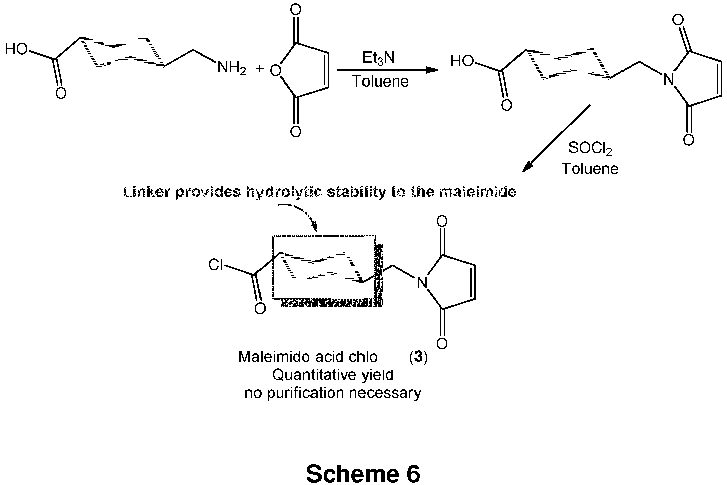

### Example 4.

The maleimide end-functionalized polyisoprene of Example 3 was converted to a PNIPAM end-functionalized polyisoprene.

To a 120 mL THF solution of the ∼450 kDa maleimide end-functionalized PI of Example 3 (5 g, 1.11 e-2 mmol) in a round-bottom flask was added a THF solution of five equiv. PNIPAM-SH (277 mg, 5.6e-2 mmol). The PNIPAM-SH contained forty N-isopropylacrylamide repeat units. After stirring for 10 minutes, a large excess of triethylamine was added and the reaction stirred for 5 minutes at room temperature. The polymer was purified by precipitation in methanol to remove the free PNIPAM-SH.

The ¹H NMR resonances assigned to the maleimide protons at δ 6.9 ppm disappeared and a new set of peaks appeared at δ 2.8 ppm and δ 2.9 ppm for the PNIPAM-grafted maleimide. The reaction yield was quantitative and purification of the polymer was done by precipitation from methanol. Gel Permeation Chromatography (GPC) analysis was performed to confirm the quantitative removal of the unreacted PNIPAM-SH from the target polymer

### Example 5.

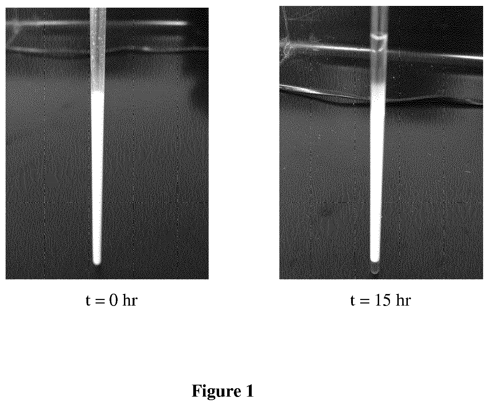

Emulsification of the PNIPAM end-functionalized elastomer of Example 4 was accomplished by shaking of a mixture of water, and chloroform solution. It resulted in an emulsion which remained stable for more than 12 hours (Figure 1). In contrast, no stable emulsion formed when a) only the maleimido end-functionalized PI or b) only the PNIPAM-SH was attempted. The former sample formed an emulsion which was stable only for few minutes whereas the later sample did not form any emulsion at all.

### Example 6.

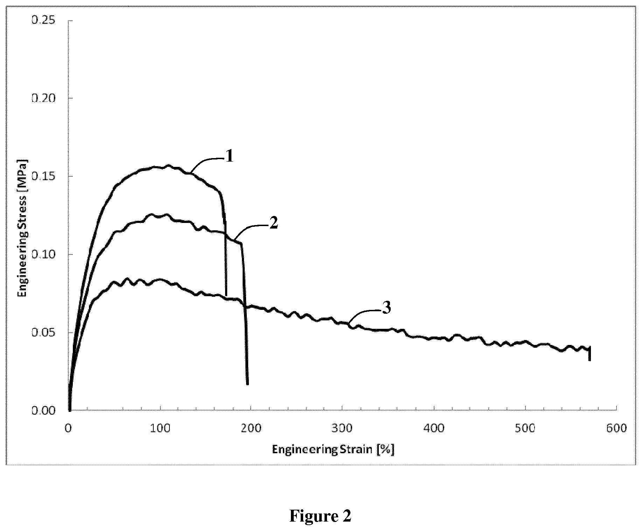

Tensile testing was done on the PNIPAM end-functionalized nanostructure-inducing polyisoprene of Example 4. A solution-based film of the end-functionalized nanostructure-inducing elastomer was casted and the solvent was allowed to evaporate completely. The tensile test data of this dry cast-film is shown in Figure 2

The control for comparison of the tensile strength was the 450 kDa hydroxyl end-functionalized (3 in Figure 2). As can be seen from Figure 2, the nanostructure-inducing polyisoprene (1 in Figure 2) has a tensile strength significantly higher than the control unfunctionalized PI (3). It is also found to have higher tensile properties compared to ∼1 MM very high-cis Neodymium-PI (2 in Figure 2). The poor elongation-at-break of the nanostructure-inducing elastomer (1) was likely due to flaws developed in the film during drying of the solution-cast film. GPC of nanostructure-inducing elastomer (2) showed that the molecular weight is around ∼455 kDa, indicating that no chemical cross-link occurred during the reaction. The absence of any chemical cross-link, coupled with the increase in tensile strength suggests the formation of the nanostructure in the end-functionalized polymer (2).

## Claims

1. A copolymer comprising: a polymeric backbone chain derived from a monomer comprising at least one conjugated diene monomer and, optionally, at least one vinyl aromatic monomer; and a polymeric side-chain bonded exclusively to a terminal end of the backbone chain, the side-chain comprising a polymer derived from a monomer having a hydrogen bond donor site and a hydrogen bond acceptor site or derived from an N-substituted monoalkylacrylamide.

2. The copolymer of claim 1 comprising the structure
X-R-O-R'-S-Z (I)
wherein X is a polymer derived from a monomer comprising at least one conjugated diene monomer and optionally at least one vinyl aromatic monomer; S is sulfur; Z is a polymer derived from a monomer having a hydrogen bond donor site and a hydrogen bond acceptor site; R is a covalent bond or an alkyl group of 1 to 12 carbon atoms bonded to a terminal end of X; O is oxygen; and R' is a divalent organic group comprising a maleimido group linked to the S.

3. The copolymer of claim 1 or 2, wherein the at least one conjugated diene monomer is selected from the group consisting of isoprene and butadiene and/or wherein the vinyl aromatic monomer is styrene.

4. The copolymer of claim 3 or 2, wherein X is selected from the group consisting of solution polymerized styrene-butadiene rubber, emulsion polymerized styrene-butadiene rubber, polybutadiene, natural polyisoprene rubber, and synthetic polyisoprene rubber.

5. The copolymer of claim 2, 3 or 4, wherein Z is derived from a monomer of formula: 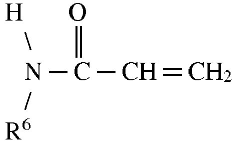 wherein R⁶ is selected from the group consisting of a C2 linear alkyl to a C6 linear alkyl, a C2 branched alkyl to a C6 branched alkyl, and a C3 cycloalkyl to a C6 cycloalkyl; or wherein Z is a poly(N-isopropylacrylamide).

6. The copolymer of at least one of the previous claims 2 to 5, wherein the polymer Z has a weight average molecular weight ranging from 500 to 20000 g/gmol.

7. The copolymer of at least one of the previous claims 2 to 6, comprising from 1 to 20 weight percent Z.

8. The copolymer of claim 2, wherein Z is of formula 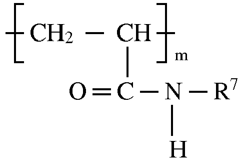 wherein R⁷ is selected from the group consisting of a C2 linear alkyl to a C6 linear alkyl, a C2 branched alkyl to a C6 branched alkyl, and a C3 cycloalkyl to a C6 cycloalkyl, and m is the degree of polymerization of the hydrocarbon chain.

9. A method of making a functionalized elastomer, the method comprising the steps of:
polymerizing at least one diene monomer and optionally a vinyl aromatic monomer in the presence of an initiator of formula (II) to produce a protected hydroxyl end-terminated polymer 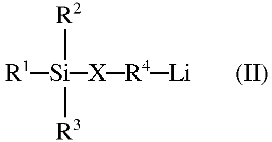 wherein R¹, R², R³ can all be the same or different and are selected from the group consisting of alkyls having from 1 to 8 carbon atoms, cycloalkyls having from 3 to 11 carbon atoms, or aryls having from 6 to 14 carbon atoms, R⁴ is an alkylene having from 1 to 8 carbon atoms, a cycloalkylene having from 3 to 11 carbon atoms, or an arylene having from 6 to 14 carbon atoms, X is S, O or NH, and Li is lithium;
de-protecting the protected hydroxyl end-terminated elastomer to produce a hydroxyl end-functionalized polymer;
reacting the hydroxyl end-funtionalized polymer with a maleimido acid chloride to produce a maleimido end-functionalized polymer; and
reacting the maleimido end-functionalized polymer with a thiol-terminated polymer derived from a monomer having a hydrogen bond donor site and a hydrogen bond acceptor site to produce the functionalized elastomer.

10. The method of claim 9, wherein the at least one diene monomer is selected from the group consisting of isoprene and butadiene and/or wherein the vinyl aromatic monomer is styrene.

11. The method of claim 9 or 10, wherein the functionalized elastomer comprises:
a polymeric backbone chain derived from the monomer comprising at least one conjugated diene monomer and optionally at least one vinyl aromatic monomer; and
a polymeric side-chain bonded exclusively to a terminal end of the backbone chain, the side-chain comprising the polymer derived from a monomer having a hydrogen bond donor site and a hydrogen bond acceptor site.

12. The method of claim 9 or 10, wherein the functionalized elastomer comprises:
a polymeric backbone chain comprising a diene based elastomer selected from the group consisting of solution polymerized styrene butadiene rubber, emulsion polymerized styrene butadiene rubber, natural polyisoprene rubber, synthetic polyisoprene rubber, and polybutadiene; and
a polymeric side-chain bonded exclusively to a terminal end of the backbone chain, the side-chain comprising a polymer derived from an N-substituted monoalkylacrylamide.

13. The method of at least one of the claims claim 9 to 12, wherein the functionalized elastomer comprises the structure:
X-R-O-R'-S-Z (I)
wherein X is a polymer derived from the monomer comprising at least one conjugated diene monomer such as isoprene or butadiene and optionally at least one vinyl aromatic monomer such as styrene, or wherein X is selected from the group consisting of solution polymerized styrene-butadiene rubber, emulsion polymerized styrene-butadiene rubber, polybutadiene, natural polyisoprene rubber, and synthetic polyisoprene rubber; S is sulfur; Z is the polymer derived from the monomer having a hydrogen bond donor site and a hydrogen bond acceptor site; R is a covalent bond or an alkyl group of 1 to 12 carbon atoms bonded to a terminal end of X; O is oxygen; and R' is a divalent organic group comprising a maleimido group linked to the S; or

14. The method of claim 13, wherein:
(i) Z is derived from a monomer of formula 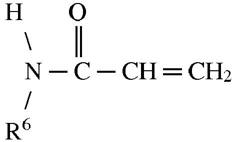 where R⁶ is selected from the group consisting of a C2 linear alkyl to a C6 linear alkyl, a C2 branched alkyl to a C6 branched alkyl, and a C3 cycloalkyl to a C6 cycloalkyl; or
(ii) Z is a poly(N-isopropylacrylamide); or
(iii) Z is of the formula 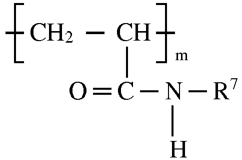 where R⁷ is selected from the group consisting of a C2 linear alkyl to a C6 linear alkyl, a C2 branched alkyl to a C6 branched alkyl, and a C3 cycloalkyl to a C6 cycloalkyl; and m is the degree of polymerization of the hydrocarbon chain.

15. The method of claim 9, wherein the initiator of formula (II) is t-butyldimethylsiloxypropyl lithium.

## Patentansprüche

1. Copolymer, umfassend: eine polymere Hauptkette, die von einem Monomer abgeleitet ist, umfassend mindestens ein konjugiertes Dien-Monomer und optional mindestens ein Vinylaromatenmonomer; und eine polymere Seitenkette, die ausschließlich mit einem terminalen Ende der Hauptkette verbunden ist, wobei die Seitenkette ein Polymer umfasst, das von einem Monomer, das eine Wasserstoffbindungs-Donatorstelle und eine Wasserstoffbindungs-Akzeptorstelle aufweist, abgeleitet ist oder von einem N-substituierten Monoalkylacrylamid abgeleitet ist.

2. Copolymer nach Anspruch 1, umfassend die Struktur
X-R-O-R'-S-Z (I)
wobei X ein Polymer ist, das von einem Monomer abgeleitet ist, umfassend mindestens ein konjugiertes Dien-Monomer und optional mindestens ein Vinylaromatenmonomer; S Schwefel ist; Z ein Polymer ist, das von einem Monomer, das eine Wasserstoffbindungs-Donatorstelle und eine Wasserstoffbindungs-Akzeptorstelle aufweist, abgeleitet ist; R eine kovalente Bindung oder eine Alkylgruppe von 1 bis 12 Kohlenstoffatomen ist, die mit einem terminalen Ende von X verbunden ist; O Sauerstoff ist; und R' eine zweiwertige organische Gruppe ist, die eine mit dem S verbundene Maleimidgruppe umfasst.

3. Copolymer nach Anspruch 1 oder 2, wobei das mindestens eine konjugierte Dien-Monomer aus der Gruppe ausgewählt ist, bestehend aus Isopren und Butadien, und/oder wobei das Vinylaromatenmonomer Styrol ist.

4. Copolymer nach Anspruch 3 oder 2, wobei X aus der Gruppe ausgewählt ist, bestehend aus lösungspolymerisiertem Styrol-Butadien-Kautschuk, emulsionspolymerisiertem Styrol-Butadien-Kautschuk, Polybutadien, natürlichem Polyisoprenkautschuk und synthetischem Polyisoprenkautschuk.

5. Copolymer nach Anspruch 2, 3 oder 4, wobei Z abgeleitet ist von einem Monomer der Formel: 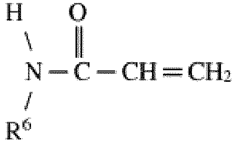 wobei R⁶ aus der Gruppe ausgewählt ist, bestehend aus einem linearen C2-Alkyl bis einem linearen C6-Alkyl, einem verzweigten C2-Alkyl bis einem verzweigten C6-Alkyl, und einem C3-Cycloalkyl bis einem C6-Cycloalkyl; oder wobei Z ein poly(N-Isopropylacrylamid) ist.

6. Copolymer nach mindestens einem der vorhergehenden Ansprüche 2 bis 5, wobei das Polymer Z eine gewichtsmittlere Molmasse im Bereich von 500 bis 20.000 g/gmol aufweist.

7. Copolymer nach mindestens einem der vorhergehenden Ansprüche 2 bis 6, umfassend von 1 bis 20 Gewichtsprozent Z.

8. Copolymer nach Anspruch 2, wobei Z die Formel hat 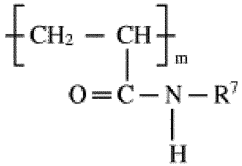 wobei R⁷ aus der Gruppe ausgewählt ist, bestehend aus einem linearen C2-Alkyl bis einem linearen C6-Alkyl, einem verzweigten C2-Alkyl bis einem verzweigten C6-Alkyl, und einem C3-Cycloalkyl bis einem C6-Cycloalkyl, und m der Polymerisationsgrad der Kohlenwasserstoffkette ist.

9. Verfahren zur Herstellung eines funktionalisierten Elastomers, wobei das Verfahren die Schritte umfasst des:
Polymerisierens mindestens eines Dienmonomers und optional eines Vinylaromatenmonomers in Gegenwart eines Initiators der Formel (II) zur Herstellung eines geschützten Hydroxyl-endterminierten Polymers 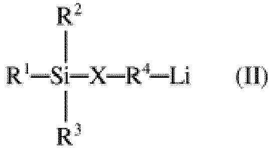 wobei R¹, R², R³ alle das gleiche oder verschieden sein können und aus der Gruppe ausgewählt sind, bestehend aus Alkylen mit 1 bis 8 Kohlenstoffatomen, Cycloalkylen mit 3 bis 11 Kohlenstoffatomen oder Arylen mit 6 bis 14 Kohlenstoffatomen, R⁴ ein Alkylen mit 1 bis 8 Kohlenstoffatomen, ein Cycloalkylen mit 3 bis 11 Kohlenstoffatomen oder ein Arylen mit 6 bis 14 Kohlenstoffatomen ist, X S, O oder NH ist und Li Lithium ist;
Ent-Schützens des geschützten Hydroxyl-endterminierten Elastomers zur Herstellung eines Hydroxyl-endfunktionalisierten Polymers;
Reagierens des Hydroxyl-endfunktionalisierten Polymers mit einem Maleimidsäurechlorid zur Herstellung eines Maleimid-endfunktionalisierten Polymers; und
Reagierens des Maleimid-endfunktionalisierten Polymers mit einem Thiolterminierten Polymer, abgeleitet von einem Monomer, das eine Wasserstoffbindungs-Donatorstelle und eine Wasserstoffbindungs-Akzeptorstelle aufweist, zur Herstellung des funktionalisierten Elastomers.

10. Verfahren nach Anspruch 9, wobei das mindestens eine Dienmonomer aus der aus Isopren und Butadien bestehenden Gruppe ausgewählt ist und/oder wobei das Vinylaromatenmonomer Styrol ist.

11. Verfahren nach Anspruch 9 oder 10, wobei das funktionalisierte Elastomer umfasst:
eine polymere Hauptkette, die von dem Monomer abgeleitet ist, umfassend mindestens ein konjugiertes Dienmonomer und optional mindestens ein Vinylaromatenmonomer; und
eine polymere Seitenkette, die ausschließlich mit einem terminalen Ende der Hauptkette verbunden ist, wobei die Seitenkette das Polymer umfasst, das von einem Monomer abgeleitet ist, das eine Wasserstoffbindungs-Donatorstelle und eine Wasserstoffbindungs-Akzeptorstelle aufweist.

12. Verfahren nach Anspruch 9 oder 10, wobei das funktionalisierte Elastomer umfasst:
eine polymere Hauptkette, umfassend ein dienbasiertes Elastomer, ausgewählt aus der Gruppe, bestehend aus lösungspolymerisiertem Styrol-Butadien-Kautschuk, emulsionspolymerisiertem Styrol-Butadien-Kautschuk, natürlichem Polyisoprenkautschuk, synthetischem Polyisoprenkautschuk und Polybutadien; und
eine polymere Seitenkette, die ausschließlich mit einem terminalen Ende der Hauptkette verbunden ist, wobei die Seitenkette ein Polymer umfasst, das von einem N-substituierten Monoalkylacrylamid abgeleitet ist.

13. Verfahren nach mindestens einem der Ansprüche 9 bis 12, wobei das funktionalisierte Elastomer die Struktur umfasst:
X-R-O-R'-S-Z (I)
wobei X ein Polymer ist, das von dem Monomer abgeleitet ist, umfassend mindestens ein konjugiertes Dien-Monomer, wie etwa Isopren oder Butadien, und optional mindestens ein Vinylaromatenmonomer, wie etwa Styrol, oder wobei X aus der Gruppe ausgewählt ist, bestehend aus lösungspolymerisiertem Styrol-Butadien-Kautschuk, emulsionspolymerisiertem Styrol-Butadien-Kautschuk, Polybutadien, natürlichem Polyisoprenkautschuk und synthetischem Polyisoprenkautschuk; S Schwefel ist; Z das Polymer ist, das von dem Monomer, das eine Wasserstoffbindungs-Donatorstelle und eine Wasserstoffbindungs-Akzeptorstelle aufweist, abgeleitet ist; R eine kovalente Bindung oder eine Alkylgruppe von 1 bis 12 Kohlenstoffatomen ist, die mit einem terminalen Ende von X verbunden ist; O Sauerstoff ist; und R' eine zweiwertige organische Gruppe ist, die eine mit dem S verbundene Maleimidgruppe umfasst.

14. Verfahren nach Anspruch 13, wobei:
(i) Z abgeleitet ist von einem Monomer der Formel 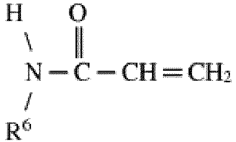 wobei R⁶ aus der Gruppe ausgewählt ist, bestehend aus einem linearen C2-Alkyl bis einem linearen C6-Alkyl, einem verzweigten C2-Alkyl bis einem verzweigten C6-Alkyl, und einem C3-Cycloalkyl bis einem C6-Cycloalkyl; oder
(ii) Z ein poly(N-Isopropylacrylamid) ist; oder
(iii) Z die Formel hat 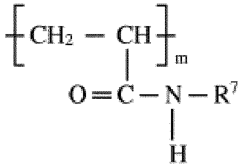 wobei R⁷ aus der Gruppe ausgewählt ist, bestehend aus einem linearen C2-Alkyl bis einem linearen C6-Alkyl, einem verzweigten C2-Alkyl bis einem verzweigten C6-Alkyl, und einem C3-Cycloalkyl bis einem C6-Cycloalkyl; und m der Polymerisationsgrad der Kohlenwasserstoffkette ist.

15. Verfahren nach Anspruch 9, wobei der Initiator der Formel (II) t-Butyldimethylsiloxypropyllithium ist.

## Revendications

1. Copolymère comprenant : une chaîne polymère principale qui dérive d'un monomère comprenant au moins un monomère diénique conjugué et, de manière facultative, au moins un monomère vinylaromatique ; et une chaîne polymère latérale liée de manière exclusive à une extrémité terminale de la chaîne principale, la chaîne latérale comprenant un polymère qui dérive d'un monomère possédant un site donneur de liaison hydrogène et un site accepteur de liaison hydrogène, ou qui dérive d'un monoalkylacrylamide substitué sur l'atome d'azote.

2. Copolymère selon la revendication 1, comprenant la structure :
X-R-O-R'-S-Z (I)
dans laquelle X représente un polymère qui dérive d'un monomère comprenant au moins un monomère diénique conjugué et de manière facultative au moins un monomère vinylaromatique ; S représente un atome de soufre ; Z représente un polymère qui dérive d'un monomère possédant un site donneur de liaison hydrogène et un site accepteur de liaison hydrogène ; R représente une liaison covalente ou un groupe alkyle contenant de 1 à 12 atomes de carbone lié à une extrémité terminale de X ; O représente un atome d'oxygène ; et R' représente un groupe organique divalent comprenant un groupe maléimido lié à l'atome de soufre.

3. Copolymère selon la revendication 1 ou 2, dans lequel ledit au moins un monomère diénique conjugué est choisi parmi le groupe constitué par l'isoprène et le butadiène et/ou dans lequel le monomère vinylaromatique est le styrène.

4. Copolymère selon la revendication 3 ou 2, dans lequel X est choisi parmi le groupe constitué par un caoutchouc de styrène-butadiène polymérisé en solution, un caoutchouc de styrène-butadiène polymérisé en émulsion, du polybutadiène, du caoutchouc de polyisoprène naturel et du caoutchouc de polyisoprène synthétique.

5. Copolymère selon la revendication 2, 3 ou 4, dans lequel Z dérive d'un monomère répondant à la formule : 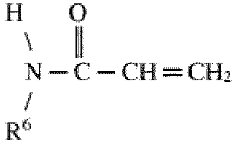 dans laquelle R⁶ est choisi parmi le groupe constitué par un groupe alkyle à chaîne droite en C₂ à un groupe alkyle à chaîne droite en C₆, par un groupe alkyle à chaîne ramifiée en C₂ à un groupe alkyle à chaîne ramifiée en C₆, et par un groupe cycloalkyle en C₃ à un groupe cycloalkyle en C₆; ou dans lequel Z représente un groupe poly(N-isopropylacrylamide).

6. Copolymère selon au moins une des revendications précédentes 2 à 5, dans lequel le polymère Z possède un poids moléculaire moyen en poids qui se situe dans la plage de 500 à 20.000 g/mol.

7. Copolymère selon au moins une des revendications précédentes 2 à 6, comprenant de 1 à 20 % en poids de Z.

8. Copolymère selon la revendication 2, dans lequel Z répond à la formule 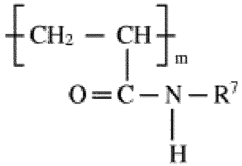 dans laquelle R⁷ est choisi parmi le groupe constitué par un groupe alkyle à chaîne droite en C₂ à un groupe alkyle à chaîne droite en C₆, par un groupe alkyle à chaîne ramifiée en C₂ à un groupe alkyle à chaîne ramifiée en C₆, et par un groupe cycloalkyle en C₃ à un groupe cycloalkyle en C₆; et m représente le degré de polymérisation de la chaîne hydrocarbonée.

9. Procédé de préparation d'un élastomère fonctionnalisé, le procédé comprenant les étapes dans lesquelles :
on polymérise au moins un monomère diénique et de manière facultative un monomère vinylaromatique en présence d'un initiateur répondant à la formule (II) afin d'obtenir un polymère dont l'extrémité terminale hydroxyle est protégée 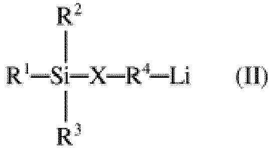 formule dans laquelle R¹, R², R³ peuvent tous être identiques ou différents et sont choisis parmi le groupe constitué par des groupes alkyle contenant de 1 à 8 atomes de carbone, des groupes cycloalkyle contenant de 3 à 11 atomes de carbone ou des groupes aryle contenant de 6 à 14 atomes de carbone, R⁴ représente un groupe alkylène contenant de 1 à 8 atomes de carbone, un groupe cycloalkylène contenant de 3 à 11 atomes de carbone ou un groupe arylène contenant de 6 à 14 atomes de carbone, X représente un atome de soufre, un atome d'oxygène ou un groupe NH, et Li représente un atome de lithium ;
on déprotège l'élastomère dont l'extrémité terminale hydroxyle est protégée afin d'obtenir un polymère dont l'extrémité possède une fonctionnalité hydroxyle ;
on fait réagir le polymère dont l'extrémité possède une fonctionnalité hydroxyle avec un chlorure de maléimido acide pour obtenir un polymère dont l'extrémité possède une fonction maléimido ; et
on fait réagir le polymère dont l'extrémité possède une fonctionnalité maléimido avec un polymère à terminaison thiol qui dérive d'un monomère possédant un site donneur de liaison hydrogène et un site accepteur de liaison hydrogène afin d'obtenir l'élastomère fonctionnalisé.

10. Procédé selon la revendication 9, dans lequel ledit au moins un monomère diénique est choisi parmi le groupe constitué par l'isoprène et le butadiène et/ou dans lequel le monomère vinylaromatique est le styrène.

11. Procédé selon la revendication 9 ou 10, dans lequel l'élastomère fonctionnalisé comprend :
une chaîne polymère principale qui dérive du monomère comprenant au moins un monomère diénique conjugué et, de manière facultative, au moins un monomère vinylaromatique ; et
une chaîne polymère latérale liée de manière exclusive à une extrémité terminale de la chaîne principale, la chaîne latérale comprenant le polymère qui dérive d'un monomère possédant un site donneur de liaison hydrogène et un site accepteur de liaison hydrogène.

12. Procédé selon la revendication 9 ou 10, dans lequel l'élastomère fonctionnalisé comprend :
une chaîne polymère principale comprenant un élastomère à base diénique choisi parmi le groupe constitué par un caoutchouc de styrène-butadiène polymérisé en solution, un caoutchouc de styrène-butadiène polymérisé en émulsion, du caoutchouc de polyisoprène naturel, du caoutchouc de polyisoprène synthétique, et du polybutadiène ;
une chaîne polymère latérale liée de manière exclusive à une extrémité terminale de la chaîne principale, la chaîne latérale comprenant un polymère qui dérive d'un monoalkylacrylamide substitué sur l'atome d'azote.

13. Procédé selon au moins une des revendications 9 à 12, dans lequel l'élastomère fonctionnalisé comprend la structure :
X-R-O-R'-S-Z (I)
dans laquelle X représente un polymère qui dérive du monomère comprenant au moins un monomère diénique conjugué tel que l'isoprène ou le butadiène, et de manière facultative au moins un monomère vinylaromatique tel que le styrène ; ou dans lequel X est choisi parmi le groupe constitué par un caoutchouc de styrène-butadiène polymérisé en solution, un caoutchouc de styrène-butadiène polymérisé en émulsion, du polybutadiène, du caoutchouc de polyisoprène naturel et du caoutchouc de polyisoprène synthétique ; S représente un atome de soufre ; Z représente le polymère qui dérive d'un monomère possédant un site donneur de liaison hydrogène et un site accepteur de liaison hydrogène ; R représente une liaison covalente ou un groupe alkyle contenant de 1 à 12 atomes de carbone lié à une extrémité terminale de X ; O représente un atome d'oxygène ; et R' représente un groupe organique divalent comprenant un groupe maléimido lié à l'atome de soufre.

14. Procédé selon la revendication 13, dans lequel :
(i) Z dérive d'un monomère répondant à la formule : 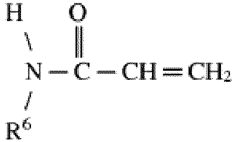 dans laquelle R⁶ est choisi parmi le groupe constitué par un groupe alkyle à chaîne droite en C₂ à un groupe alkyle à chaîne droite en C₆, par un groupe alkyle à chaîne ramifiée en C₂ à un groupe alkyle à chaîne ramifiée en C₆, et par un groupe cycloalkyle en C₃ à un groupe cycloalkyle en C₆; ou
(ii) Z représente un groupe poly(N-isopropylacrylamide) ; ou
(iii) Z répond à la formule 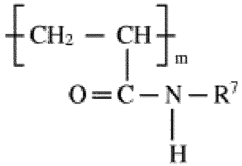 dans laquelle R⁷ est choisi parmi le groupe constitué par un groupe alkyle à chaîne droite en C₂ à un groupe alkyle à chaîne droite en C₆, par un groupe alkyle à chaîne ramifiée en C₂ à un groupe alkyle à chaîne ramifiée en C₆, et par un groupe cycloalkyle en C₃ à un groupe cycloalkyle en C₆; et m représente le degré de polymérisation de la chaîne hydrocarbonée.

15. Procédé selon la revendication 9, dans lequel l'initiateur répondant à la formule (II) et le t-butyldiméthylsiloxypropyl lithium.
